# EUROPEAN PATENT APPLICATION

(11) **EP 2 003 559 A2**
(43) Date of publication of application: **17.12.2008**
(21) Application number: 08153324.2
(22) Date of filing: 26.03.2008
(51) Int. Cl.: G06F 11/07

(54) **Method for protecting the physical memory in a microprocessor system**

(30) Priority: 30.03.2007 IT TO20070229
(71) Applicant: Faiveley Transport Italia S.p.A., 10045 Piossasco TO (IT)
(72) Inventor: TIONE, Roberto, I-10020, LAURIANO (Torino) (IT); SERRI, Stefano, I-10042, NICHELINO (Torino) (IT)
(74) Representative: Quinterno, Giuseppe

(57) **Abstract**

The method includes the following steps:
- identifying a plurality of read and write operations (2a, 2b, 2i, 2N; 200a, 200b) able to be performed by the microprocessor (1, 100);
- providing programmable devices (4) able to divide up the memory (5) into a plurality of portions (5a, 5b, 5i, 5N; 500a, 500b) and associate each memory portion (5a, 5b, 5i, 5N; 500a, 500b) with respective operations (2a, 2b, 2i, 2N; 200a, 200b);
- executing the operations (2a, 2b, 2i, 2N; 200a, 200b) and intercepting (40) any accessing of memory portions (5a, 5b, 5i, 5N; 500a, 500b) not associated with the respective operation (2a, 2b, 2i, 2N; 200a, 200b) being executed; and
- sending an error signal from the programmable devices (4) to the microprocessor (1; 100) in the event of access to memory portions (5a, 5b, 5i, 5N; 500a, 500b) not associated with the respective operation (2a, 2b, 2i, 2N; 200a, 200b) being executed.

## Description

The present invention relates to a method for protecting the physical memory of a microprocessor system, which is used in "embedded" applications where safety is involved, as, for example, in the case of braking systems of railway vehicles.

More specifically, the invention relates to a method for preventing access to prohibited memory areas.

The system for controlling the braking system of a railway or tramway vehicle constitutes an embedded application, namely an electronic system with microprocessor - designed specifically for a given application, often with an *ad hoc* hardware platform - which is incorporated in the system which it controls and is able to manage all or some of the functions thereof. This system has a software which manages in particular temporal division of a set of read and write operations or tasks performed by the said system, synchronization thereof and management of the communications primitives.

The concept of protecting the physical memory of the system is based on the fact that each operation, during its execution, may be integrated to a greater or lesser degree with other operations depending on the organization of the software.

Prior to the present invention, the division of the memory areas and competences of the operations was not subject to any hardware control on the system. If an operation accidentally wrote in an unauthorized area, the system stopped only if this incorrect writing operation caused serious malfunctioning of the software, which was followed by activation of hardware error mark mechanisms, such as the so-called vital signal or a watch-dog.

The hardware procedures above cited checked only that a given function was performed within a predefined time interval and that there was no access to inexistent hardware.

In such a control system, a serious software error nearly always has extremely damaging effects, such as the access to areas whose addresses are not defined in the system, which is followed by "bus-error", "address error" or "illegal instruction" reports with consequent stopping of the system. For example, a pointer which increments and writes in an unauthorized memory area causes surely damages during the first access, but systems according to the prior art above described intercepted this error only when it was attempted to read or write in an inexistent memory area, part of the system memory having already been overwritten.

This has two important negative consequences: the first consequence is that a delay in intercepting an error may cause serious damages to the overall system (hardware, software and braking system of the vehicle); the second consequence is that, if unauthorized writing in the memory occurs, the software modules for recovery of the events are also damaged, making it impossible to determine the original cause of the error.

One object of the present invention is to propose a method for controlling the correct execution of the operations by an electronic or microprocessor system, preventing access to prohibited memory areas, thus improving the reliability of the control mechanisms and, in the case of a system for controlling a braking installation, the safety of the latter.

This and other objects are achieved according to the invention by a method, whose main characteristics are defined in claim 1.

Further characteristics and advantages of the invention will become clear from the following detailed description, provided purely by way of non-limiting example, with reference to the accompanying drawings, in which:
- Figure 1 is a schematic illustration of a mode of implementation of the method according to the invention;
- Figure 2 is an alternative schematic illustration of the method according to the invention.

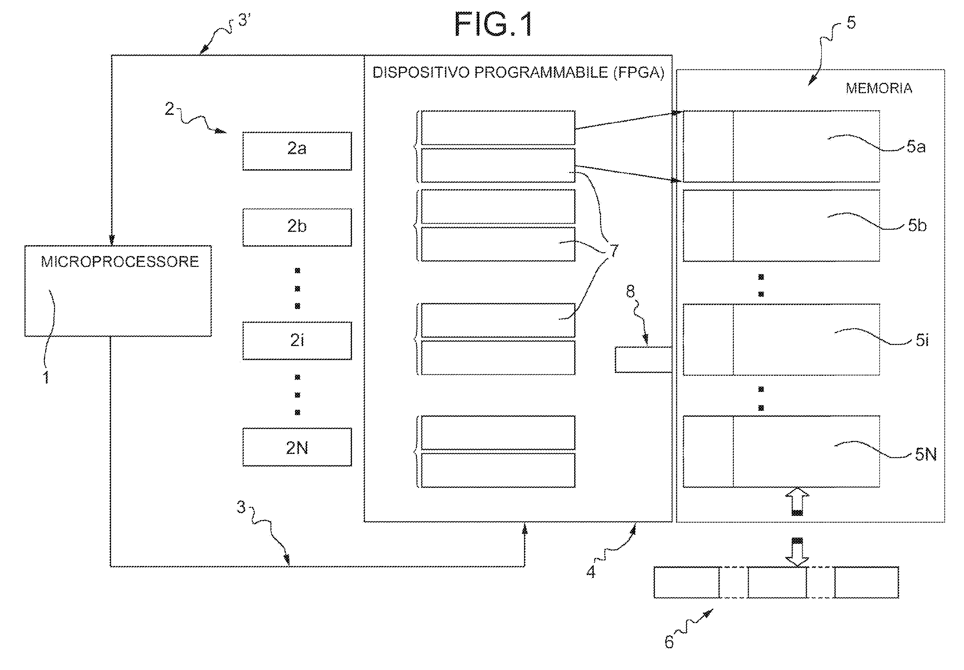

In Figure 1, 1 denotes a microprocessor and 2 denotes a set of read and write operations 2a, 2b, 2i, 2N which may be performed by said microprocessor 1, which is controlled by a system management software. The microprocessor 1 is able to manage two execution modes: in a first mode the functions of the operating system and driver portions are executed and in a second mode the user applications are executed. The microprocessor 1 is able to send a status signal identifying the execution modes, via a line 3, to a programmable device 4, for example of the FPGA type.

The programmable device 4 is able to divide up the physical memory 5 of the system into a plurality of memory portions 5a, 5b, 5i, 5N, as explained below.

Said portions 5a, 5b, 5i, 5N contain at least one stack, i.e. an area reserved for dynamic variables, and a static memory, i.e. an area reserved for visible or invisible, protected, static variables.

The microprocessor 1, during functioning thereof, performs the operations 2a, 2b, 2i, 2N accessing the memory portions 5a, 5b, 5i, 5N by means of addresses which it transmits to the programmable device 4. The microprocessor 1 may also access slots 6, which are memory spaces intended for the input and/or output peripherals. Each operation 2a, 2b, 2i, 2N may access only a respective memory portion 5a, 5b, 5i, 5N.

The programmable device 4 contains a plurality of registers 7 where each register contains an address corresponding to a position in the memory; two consecutive registers 7 are able to identify one of the portions of the memory 5a, 5b, 5i, 5N as well as the memory area defined between the two consecutive addresses contained in these registers 7.

The programmable device 4 then associates each operation 2a, 2b, 2i, 2N with a respective memory portion 5a, 5b, 5i, 5N.

The programmable device 4 is able to intercept the addresses from the microprocessor 1 and check whether they are respectively smaller than the address contained in a first register 7 and greater than that contained in a second register 7 of a pair of registers associated with the operation 2a, 2b, 2i, 2N being executed. In this way the programmable device 4 checks, on each occasion, that each operation 2a, 2b, 2i, 2N writes the appropriate associated memory portion 5a, 5b, 5i, 5N.

In the case of mistaken access to the memory performed by an operation 2a, 2b, 2i, 2N, the programmable device 4 sends to the microprocessor 1 an error signal via a line 3' and the microprocessor 1 stops the system.

The programmable device 4 is also able to allow, on the basis of the status signal identifying the mode of execution of the microprocessor 1, access to the memory 5 also in transparent mode for each operation 2a, 2b, 2i, 2N. In fact, when the microprocessor 1 is in the first execution mode, the programmable device 4 allows access to the entire memory 5 irrespective of the operation being executed. On the other hand, when the microprocessor 1 is in the second execution mode, the programmable device 4 allows access only to the memory portion 5a, 5b, 5i, 5N associated with the respective operation 2a, 2b, 2i, 2N being executed.

As an alternative to the use of a pair of registers 7 for partitioning the memory 5 into the plurality of portions 5a, 5b, 5i, 5N, it is possible to identify said portions 5a, 5b, 5i, 5N only with their initialization address having predefined a common size for all the portions 5a, 5b, 5i, 5N. In this way, the programmable device 4 must perform only a comparison of addresses, thus economizing the resources of the programmable device 4.

If the size of the static RAM memory inside the programmable device 4 is sufficiently large, it is possible to construct a table of "permitted events" containing all the possible associations between the operations 2a, 2b, 2i, 2N which can be performed by the microprocessor 1 and the memory portions 5a, 5b, 5i, 5N. Said table is then stored in this programmable device 4 during initialization of the system. At the end of the initialization step, access to this table is prevented.

In this case, the programmable device 4 is conveniently provided with an identification register 8 into which, whenever an operation 2a, 2b, 2i, 2N commences, the microprocessor 1 introduces a code identifying the operation 2a, 2b, 2i, 2N, being executed. In this way the programmable device 4 will read from the table of "permitted events", on the basis of said identification code, which operation 2a, 2b, 2i, 2N, is being executed and consequently which memory portion 5a, 5b, 5i, 5N may be accessed by the microprocessor 1. In this way a considerable reduction in the time for execution of an operation 2a, 2b, 2i, 2N is achieved since it is required to perform a single writing operation in the identification register 8.

In the case where, instead, the static RAM space in the programmable device 4 is smaller than that described above, the microprocessor 1 loads, each time an operation 2a, 2b, 2i, 2N commences, the information relating to the association of said operation with the respective memory portion 5a, 5b, 5i, 5N.

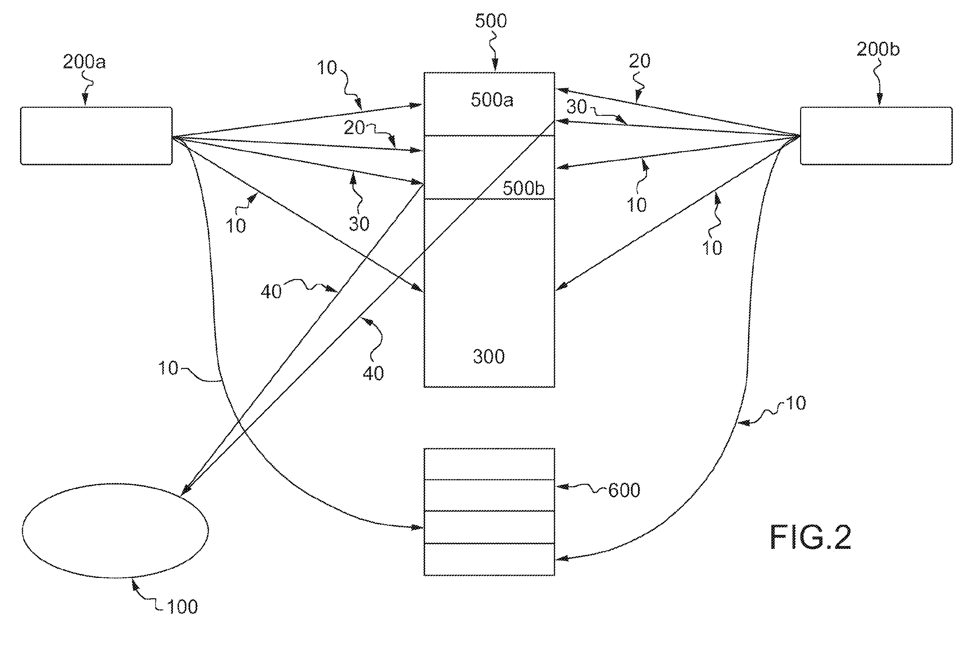

Figure 2 illustrates functioning of the system in an alternative mode. In this figure, 100 denotes the microprocessor, and 200a and 200b denote two operations. Each of these operations 200a and 200b is able to access a memory 500 which consists of a portion 300, common to both the operations 200a and 200b, and two portions 500a and 500b associated with the respective operations 200a and 200b. The figure also shows slots 600.

The arrows denoted 10 represent read and write commands, the arrows denoted 20 indicate read-only commands, and the arrows denoted 30 indicate write-only commands.

As can be noted, if the operation 200a reads or writes (arrow 10) in the common portion 300, in its portion 500a or in the slots 600, everything is functioning correctly. The same is also true if only reading (arrow 20) of the portion 500b is performed. If, on the other hand, it is attempted to write (arrow 30) into the portion not associated with the operation 200a, namely in this case it is attempted to write into the portion 500b, an error signal (arrow 40) is sent to the microprocessor 100.

The same mirror-image operating sequence may be observed with regard to the operation 200b, where the error signal (arrow 40) is sent if writing (arrow 30) of the portion 500a is attempted.

Obviously, without modifying the principle of the invention, the embodiments and the constructional details may be greatly varied with respect to that which has been described and illustrated above purely by way of a non-limiting example, without thereby departing from the scope of invention as defined in the accompanying claims.

## Claims

1. Method for protecting the physical memory in a system comprising at least one microprocessor (1,100), said method including the following steps:
- identifying a plurality of read and write operations (2a, 2b, 2i, 2N; 200a, 200b) able to be performed by the microprocessor (1, 100);
- providing programmable means (4) able to divide up the memory (5) into a plurality of portions (5a, 5b, 5i, 5N; 500a, 500b) and associate each of said memory portions (5a, 5b, 5i, 5N; 500a, 500b) with respective operations (2a, 2b, 2i, 2N; 200a, 200b);
- executing the plurality of operations (2a, 2b, 2i, 2N; 200a, 200b) and intercepting (40) any accessing of memory portions (5a, 5b, 5i, 5N; 500a, 500b) not associated with the respective operation (2a, 2b, 2i, 2N; 200a, 200b) being executed; and
- sending an error signal from the programmable means (4) to the microprocessor (1; 100) in the event of access to memory portions (5a, 5b, 5i, 5N; 500a, 500b) not associated with the respective operation (2a, 2b, 2i, 2N; 200a, 200b) being executed.

2. Method according to Claim 1, in which the microprocessor (1; 100) ceases to execute the operations (2a, 2b, 2i, 2N; 200a, 200b) should it receive the error signal.

3. Method according to Claim 1 or 2, also comprising the step of identifying at least two execution modes and sending a status signal, identifying this execution mode, from the microprocessor (1; 100) to the programmable means (4).

4. Method according to Claim 3, in which a first execution mode is such that the programmable means (4), upon receiving the status signal, are able to allow access to the entire memory (5) independently of the operation (2a, 2b, 2i, 2N; 200a, 200b) being executed.

5. Method according to Claim 3, in which a second execution mode is such that the programmable means (4), upon receiving the status signal, are able to allow access only to predetermined memory portions (5a, 5b, 5i, 5N; 500a, 500b) depending on the operation (2a, 2b, 2i, 2N; 200a, 200b) being executed.

6. Method according to any one of the preceding claims, in which the programmable means (4) comprise a plurality of registers (7) and each register (7) contains an address corresponding to a position inside the memory.

7. Method according to Claim 6, in which the programmable means (4) divide up the memory (5) into a plurality of portions (5a, 5b, 5i, 5N; 500a, 500b) using a first and a second register (7), where said first register (7) contains a first address and said second register (7) contains a second address, so that the memory portion (5a, 5b, 5i, 5N; 500a, 500b) corresponding to said first and second register (7) is equal to the memory area (5) defined between said first and second address.

8. Method according to Claim 6, in which the programmable means (4) divide up the memory (5) into a plurality of portions (5a, 5b, 5i, 5N; 500a, 500b) using a register (7) containing an address and the memory portion (5a, 5b, 5i, 5N; 500a, 500b) corresponding to said register is obtained by fixing at a constant value the size of said portion (5a, 5b, 5i, 5N; 500a, 500b).

9. Method according to any one of Claims 6 to 8, in which the step of intercepting (40) any access to memory portions (5a, 5b, 5i, 5N; 500a, 500b) not associated with the respective operation (2a, 2b, 2i, 2N; 200a, 200b) being executed is performed by comparing an address from the microprocessor (1; 100) with the addresses contained in the registers (7).

10. Method according to any one of the preceding claims, in which, whenever an operation (2a, 2b, 2i, 2N; 200a, 200b) commences, the microprocessor (1; 100) loads the information relating to the association of said operation (2a, 2b, 2i, 2N; 200a, 200b) with the respective memory portion (5a, 5b, 5i, 5N; 500a, 500b).

11. Method according to any one of Claims 1 to 9, in which the programmable means (4) are able to store in a table of "permitted events" all the associations between the operations (2a, 2b, 2i, 2N; 200a, 200b) and the respective memory portions (5a, 5b, 5i, 5N; 500a, 500b).

12. Method according to any one of the preceding claims, in which the programmable means (4) contain an identification register (8) able to contain a code identifying the operation (2a, 2b, 2i, 2N; 200a, 200b) being executed.

13. Method according to Claim 11 and 12, in which, whenever a plurality of operations (2a, 2b, 2i, 2N; 200a, 200b) commence, the microprocessor (1;100) transmits to the programmable means (4) said identification code so that said programmable means (4) are able to obtain from the table of "permitted events" the memory portion (5a, 5b, 5i, 5N; 500a, 500b) corresponding to said operation (2a, 2b, 2i, 2N; 200a, 200b) being executed.
